# EUROPEAN PATENT SPECIFICATION

(11) **EP 2 005 817 B1**
(45) Date of publication and mention of the grant of the patent: **27.09.2017**
(21) Application number: 07730418.6
(22) Date of filing: 30.03.2007
(51) Int. Cl.: A01G 31/02

(54) **PLANT CULTIVATION METHOD**
PFLANZENKULTIVIERUNGSVERFAHREN
PROCÉDÉ DE CULTURE DE PLANTES

(30) Priority: 30.03.2006 ES 200600825
(43) Date of publication of application: 24.12.2008
(73) Proprietor: Instain, S.L., 04640 Pulpi Almeria (ES)
(72) Inventor: BELMONTE NAVARRO, Lorenzo, 04640 Pulpi (Ameria) (ES)
(74) Representative: Gonzalez Palmero, Fé
(86) International application number: PCT/ES2007/000178
(87) International publication number: WO 2007/113355

(56) References cited:
- EP-A1- 0 301 619
- EP-A1- 0 937 386
- WO-A1-82/02642
- ES-A1- 2 034 873
- ES-A1- 2 142 254
- ES-A1- 2 142 254
- JP-A- 03 126 122
- JP-A- 04 121 123
- US-A- 3 550 319
- US-A- 3 550 319
- US-A- 4 329 812
- US-A- 4 392 327

## Description

### OBJECT OF THE INVENTION

This invention relates to a new plant cultivation method, which occupies an intermediate position between classical substrate cultivation and modern hydroponic cultivation, and may thus be considered to be a mixed solution that blends the two advantages of the above-mentioned methods.

Therefore, the object of the invention is to combine a hydroponic system, wherein the plants are supplied with a solution bearing the basic nutrients necessary for plant development, but providing the installation with a substrate that has the dual function of collaborating in the supply of nutrients and acting as a physical support for the plants, whilst additionally incorporating a number of other characteristics that make it possible to substantially improve the cultivation results.

### BACKGROUND OF THE INVENTION

As is well-known, hydroponic cultivation consists of an artificial cultivation method, wherein a fertiliser liquid or solution is used that has a suitable formulation for the nutrient needs of the specific type of plant to be cultivated, such that, with appropriate lighting, which may also be artificial, the proper concentration and proportion of nutrients dissolved in the water make the plant growth conditions optimal and, consequently, also makes the cultivation productive, much better than the classical substrate cultivation systems.

The applicant is the holder of patent of invention ES2142254, which discloses a hydroponic cultivation method and the device for the implementation thereof, which consists of a plurality of superimposed separate channels, supported by a pair of parallel, filiform elements, such that these channels, which are made of plastic sheets, allow both for the plants to be placed thereon and for closed-circuit circulation of the solution containing the nutrients, such that, by properly controlling, using a computer programme, the formulation of said solution at the outlet of the channels, those nutrients which are necessary to keep the theoretical formulation are supplied thereto and, consequently, from the standpoint of nutrient supply, the cultivation conditions are optimal.

This solution, which is perfectly valid from the theoretical standpoint, in practise presents a potential long-term sanitary problem; namely, since the plants are exclusively supplied with those nutrients that are contained in the formulation, and which evidently are those which are essential for optimal plant growth conditions, certain elements that the plants habitually absorb from the soil in minimum, practically negligible, quantities, do not reach the plants in this case, such that, given that the latter are a source of food for human beings, the latter do not obtain the above-mentioned elements or components, which, in time, may lead to a deficiency that may cause certain types of diseases or predispose the human body to catch them.

The document EP 0 937 386 discloses an hydroponic culture method and device consisting in establishing a stratified laminar support, i.e. a support based on several superimposed sheets which, in addition to providing channel units for the fertilizer liquid, constitutes a means of attachment for the plant roots as it is fitted with offset holes through which labyrinthine conducts are formed for the roots, and thus, as the plant grows and consequently requires a greater stability, the roots become progressively lodged in the holes in the various strata, thereby providing an optimum mechanical attachment. The implementation of this procedure involves the use of a device structured on a plurality of sheets having different widths designed to form a plurality of superimposed channel units of an indefinite length fitted with folded edges for supporting a pair of parallel cables or rods, the ends of which are attached to supports of an adequate height conveniently designed to raise the multiple channels and to optimize the operators' working conditions.

### DESCRIPTION OF THE INVENTION

The cultivation method proposed by the invention, consisting of a cultivation method comprising the features of claim 1, solves, in a fully satisfactory manner, the problem described above, since it represents a mixed solution, as mentioned above, which, in addition to being based on classical hydroponic cultivation systems, i.e., the supply of water containing nutrients, also uses a substrate, which allows the plants to absorb those elements that it needs and which are not found in the solution from said substrate.

To this end, more specifically, and starting from a structure similar to that of the above-mentioned invention, on the basis of a series of "V"-profile sheets, which are superimposed and suspended from a pair of lateral and longitudinal filiform elements, the method of the invention consists of placing substrate on the first, or upper, layer, where the substrate additionally acts as a physical support for the plants; at an appropriate height of the lateral walls of the sheet which constitute this first layer orifices made for the overflow of the nutrient solution, which, in addition to permanently keeping the substrate moist up to the height considered to be suitable, which is defined by the position of said orifices, the nutrient solution t overflows towards the lower levels, generally one or two, where the plant roots are exclusively situated, accessing them through the water overflow orifices, which must be sufficiently small so as not to allow passage of the substrate therethrough.

In accordance with another characteristic of the invention and in order to facilitate any handling on the first layer, i.e., on the substrate, it has been provided that the cover of the installation is to be fastened by thermo-welding to the rest of the group of sheets through one of the longitudinal edges thereof, whereas the other edge incorporates an adhesive agent, preferably of the re-usable type, as a fastening medium, since this closing system does not damage the installation and does not cause ecological problems, as does the classical clip-closing system.

Going back to the supply of nutrients to the installation, a suitably perforated tubing is placed on the bottom of the first layer, i.e. immediately below the substrate mass, overflowing towards the lower layers, wherefrom it is finally recovered towards the nutrient reformulation and solution recycling system.

This solution transfer system between different levels by means of overflow at a considerable height, improves the oxygenation conditions of the roots.

Two channels or tubes are also placed, one for the nutrient-bearing solution or liquid and another for aeration, either to oxygenate it by means of CO₂ for carbon fertilisation or for disinfection.

Finally, it should be noted that, when the installations are located in open air, they may simultaneously act as rainwater collectors, thus solving potential water scarcity problems.

### DESCRIPTION OF THE DRAWINGS

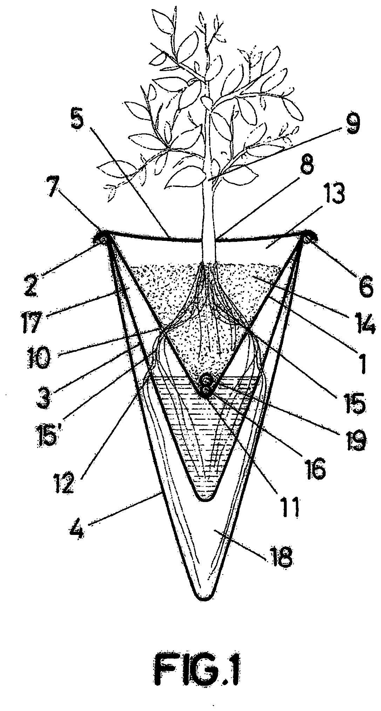

In order to complement the description herein and to contribute to a better understanding of the characteristics of the invention, in accordance with an example of practical embodiment thereof, a single sheet of diagrams is attached as an integral part of said description, the single figure whereof schematically represents, for illustrative and non-limiting purposes, a cross-section of a plant cultivation system that uses the method of the invention.

### PREFERRED EMBODIMENT OF THE INVENTION

In view of the figure mentioned, one may observe that in order to implement the method proposed by the invention, a first sheet (1) is used, preferably made of plastic, which configures a dihedron of indefinite length, mounted through its mouthpiece on a pair of parallel and longitudinal rods or cables (2), which in turn constitute the physical support for a second dihedral sheet (3) and for a third dihedral sheet (4), successively placed below the preceding one, the ensemble being supplemented by a cover (5), which in turn configures a markedly obtuse dihedron that is fastened, by means of welding, at one of the longitudinal edges thereof (6) to the corresponding edge of the rest of the sheets (1), (3), (4), mounted on the corresponding rod (2), and at the opposite edge (7) is attached to the other side of the structure, in this case being removable through an adhesive strip, preferably made of a contact, re-usable adhesive.

The cover (5) has orifices (8) for passage of the plant stem (9), the sheet determining the upper cultivation layer has lateral orifices (10) that are set at a suitable distance with respect to the bottom or vertex (11) thereof, and the sheet (3) making up the second layer also has lateral orifices (12) that are higher than the bottom thereof, whereas the last sheet (4) acts as a final collector and lacks any type of communication with the exterior, except for the external nutrient solution collector.

In the upper layer (13) defined between the sheet (1) and the cover (5), a substrate mass (14) is placed which occupies most of it, such that the plant roots (15) are distributed throughout said substrate mass (14), absorbing nutrients therefrom, especially from the solution that keeps it permanently moist and which is supplied through a suitably perforated longitudinal tube (16) located close to the vertex (11), the water overflowing through the orifices (10), wherethrough part of the roots (15') pass in order to keep the lower portion of the second layer (17) inundated, and from here the water containing the nutrients overflows through the orifices (12) to the lower level (18), which acts as a collector.

Next to the above-mentioned tubing (16) designed for the supply of the nutrient-bearing solution, a second tubing (19) is placed, which has a greater diameter and is equally perforated, and which supplies gases to aerate the plant roots, in order to promote oxygenation, carbon fertilisation, disinfection through the supply of ozone, etc.; this gas exits to the exterior through the orifices (8) in the cover, also affecting the plant stems (9) and is retained between its leaves, which, particularly in the case of disinfection, makes the latter extremely effective, as is also the case with the oxygenation thereof.

## Claims

1. Cultivation method for plants, of the type that uses several superimposed channels made of "V"-folded plastic sheets located at different layers, supported on the free edges thereof by a pair of rods or cables, several layers being created there between which are closed by means of an upper cover, wherein the plant roots (15) are placed, which receive the nutrients from an aqueous solution that circulates in cascade fashion through said layers; wherein an upper layer (13), that constitutes an upper "V" sheet (1) and a cover (5), incorporates a substrate mass (14) which constitutes the basic rooting area for the plants and which is kept permanently moist with the nutrient solution **characterized in that** the upper layer (13), wherein the substrate mass (14) is placed, is freely accessible through the cover (5) thanks to the existence on one of the edges (7) of said cover (5), of an adhesive strip, preferably made of a contact, re-usable adhesive.

2. Cultivation method for plants, according to claim 1, wherein the nutrient solution is supplied to the upper layer (13) through a tube (16) located next to the edge (11) of the upper "V" sheet (1) that delimits said upper layer (13), the lateral walls of said sheet body (1) incorporating orifices (10) that act as overflows, located at an appropriate height in accordance with the proportion of substrate mass (14) intended to be permanently inundated, said orifices (10) also acting as an outlet for part of the plant roots (15), and overflow orifices (12) are placed on a second layer (17), defined by a second "V" sheet (3), also on the lateral areas thereof, significantly separated from the lower edge or vertex.

3. Cultivation method for plants, according to claim 1 or claim 2, wherein a supply of gas is simultaneously provided, for oxygenation, carbon fertilization or disinfection, through a perforated tubing (19), said gas affecting all the cultivation layers, passing through orifices (10) and (12), and even reaching a plant stem (9) and leaves through orifices (8) in the cover (5).

## Patentansprüche

1. Kultivierungsverfahren für Pflanzen jenes Typs, der einige übereinander liegende Kanäle bestehend aus "V"-gefalteten Kunststofflagen, die sich auf verschiedenen Schichten befinden, verwendet, und die an den freien Rändern davon durch ein Paar Stäbe oder Kabel abgestützt werden, wobei einige Schichten dazwischen gebildet sind, die durch eine obere Abdeckung geschlossen sind, worin die Pflanzenwurzeln (15) eingepflanzt sind, welche die Nährstoffe von einer wässrigen Lösung, die auf Kaskadenweise durch die genannten Schichten strömt, beziehen; wobei eine obere Schicht (13), die eine obere "V"-Lage (1) und eine Abdeckung (5) enthält, eine Substratmasse (14) umfasst, die den grundlegenden Verwurzelungsbereich für die Pflanzen darstellt und die mit der Nährstofflösung ständig feucht gehalten wird, wobei die obere Schicht (13), in der sich die Substratmasse (14) befindet, durch die Abdeckung (5) dank des Vorhandenseins eines Klebestreifens, vorzugsweise hergestellt aus einem Mehrweghaftkleber, auf einem der Ränder (7) der genannten Abdeckung (5) frei zugänglich ist.

2. Kultivierungsverfahren für Pflanzen nach Anspruch 1, wobei die Nährstofflösung der oberen Schicht (13) durch ein Röhrchen (16), das sich neben dem Rand (11) der oberen "V"-Lage (1) befindet, die die genannte obere Schicht(13) abgrenzt, zugeführt wird, wobei die seitlichen Wände des genannten Lagenkörpers (1) Öffnungen (10) umfassen, die als Überläufe dienen, welche sich auf einer entsprechenden Höhe in Übereinstimmung mit dem Verhältnis der Substratmasse (14), die permanent befeuchtet werden soll, befinden, wobei die genannten Öffnungen (10) auch als Ausgänge für einen Teil der Pflanzenwurzeln (15) dienen, und Überlauföffnungen (12) auf einer durch eine zweite "V"-Lage (3) definierten zweiten Schicht (17), ebenfalls auf den seitlichen Bereichen davon, vorgesehen sind und im Wesentlichen vom unteren Rand oder Eckpunkt getrennt sind.

3. Kultivierungsverfahren für Pflanzen nach Anspruch 1 oder Anspruch 2, wobei eine Gasversorgung gleichzeitig für eine Sauerstoffanreicherung, Kohlenstoffdüngung oder Desinfektion durch eine perforierte Leitung (19) vorgesehen ist, wobei das genannte Gas alle Kultivierungsschichten erreicht, indem es durch Öffnungen (10) und (12) strömt und sogar zu einem Pflanzenstängel (9) und Blättern durch Öffnungen (8) in der Abdeckung (5) gelangt.

## Revendications

1. Méthode de culture des plantes, d'un type qui utilise plusieurs canaux superposés constitués de plaques en pastique plié en V situés sur différentes couches, soutenus sur les bords libres de ceux-ci par une paire de barres ou câbles, plusieurs couches étant créées au milieu, fermées par une protection supérieure, où les racines des plantes (15) sont situées, qui reçoivent les nutriments d'une solution aqueuse qui circule de type cascade par lesdites couches : une couche supérieure (13), qui constitue une couche supérieure en « V » (1) et une protection (5), comprend une masse de substrat (14) étant la zone d'enracinement de base pour les plantes et maintenue humide en permanence avec la solution de nutriments qui se **caractérisée par** la couche supérieure (13), où est placée la masse de substrat (14), est accessible librement par la protection (5) grâce à la mise en place sur l'un des bords (7) de ladite protection (5), d'une bande adhésive, de préférence constituée d'un adhérant de contact réutilisable.

2. Méthode de culture des plantes, conformément à la revendication 1, où la solution de nutriments est fournie à la couche supérieure (13) par un tube (16) situé près du bord (11) de la couche supérieure en « V » (1)qui délimite ladite couche supérieure (13), les parois latérales dudit boîtier de plaques (1) avec des orifices (10) qui servent d'écoulements, situés à une hauteur appropriée en fonction de la proportion de masse de substrat (14) qui devrait être inondée en permanence, lesdits orifices (10) agissant également comme sortie d'une partie des racines des plantes (15), et des orifices d'écoulement (12) sont placés sur une seconde couche (17), définie par une seconde couche en « V » (3), également sur les zones latérales de celle-ci, séparées de manière significative du bord inférieur ou vertex.

3. Méthode de culture des plantes, conformément à la revendication 1 ou la revendication 2, où une alimentation en gaz est fournie simultanément, pour oxygénation, fertilisation carbonique ou désinfection, par un tube perforé (19), ledit gaz ayant un effet sur toutes les couches de culture, passant par les orifices (10) et (12), atteignant la tige de la plante (9) et les feuilles par les orifices (8) sur la protection (5).
